(19) Europäisches Patentamt European Patent Office Office européen des brevets

(11) EP 2 416 186 A1

(12) EUROPEAN PATENT APPLICATION
published in accordance with Art. 153(4) EPC

(43) Date of publication:
08.02.2012 Bulletin 2012/06

(51) Int Cl.:
G02B 3/00 (2006.01)     G02B 5/18 (2006.01)
G11B 7/135 (2012.01)

(21) Application number: 10761506.4

(22) Date of filing: 23.02.2010

(86) International application number:
PCT/JP2010/052726

(87) International publication number:
WO 2010/116804 (14.10.2010 Gazette 2010/41)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 30.03.2009 JP 2009082300

(71) Applicant: Konica Minolta Opto, Inc.
Hachioji-shi, Tokyo 192-8505 (JP)

(72) Inventor: SUGA Shinobu
Hachioji-shi
Tokyo 192-8505 (JP)

(74) Representative: Henkel, Breuer & Partner
Patentanwälte
Maximiliansplatz 21
80333 München (DE)

(54) **LENS**

(57) Provided is a lens having a high NA, wherein defects caused when the lens is molded can be eliminated and the lens exhibits a high mountability. A transition surface transferring surface (31b) is formed between a first optical surface transferring surface (31a) and an intermediate end surface transferring surface (31c) to form a transition surface. Consequently, if a lens (OE) has a large thickness deviation ratio, the occurrence of a flow mark, etc., is prevented in order to achieve a high precision molding of the lens.

FIG. 2

EP 2 416 186 A1

**Description**

**TECHNICAL FIELD**

The present invention relates to a lens with a NA of 0.7 or more in highly accurate shape.

**BACKGROUND ART**

In recent years, research and development of a high density optical disc system capable of recording and/or reproducing (hereinafter, "record and/or reproduce" will be referred as "record/reproduce") information by using a blue-violet semiconductor laser with wavelength of about 400 nm are proceeding swiftly. As an example, in the case of an optical disc on which information is recorded/reproduced under the specifications that NA is 0.85 and a light source wavelength is 405 nm, namely, in the case of the so-called Blu-ray Disc (hereinafter, BD), it is possible to record information of 23 to 27 GB per layer for an optical disc with a diameter of 12 cm, which is same in size as DVD (NA is 0.6, wavelength of a light source is 650 nm, and memory capacity is 4.7 GB). This optical disc is referred as a high density optical disc in the present specification.

As an objective lens for use in an optical pickup apparatus, there is disclosed an objective lens obtained by molding resin, for example, in Patent Literature 1.

**CITATION LIST**

**PATENT LITERATURE**

Patent Literature 1: JP-A No. 2003-15031

**SUMMARY OF INVENTION**

**TECHNICAL PROBLEM**

As for the lens disclosed in Patent Literature 1, a connecting area is arranged on a portion on a lens surface which is outside from an intersection of the outermost ray within numerical aperture NA and the lens surface, in order to avoid defective molding of a lens. According to a result of study of the present inventor, it has been found that, even when such the connection area is provided, defective molding such as flow marks can be generated under the condition that a thickness deviation ratio (which will be described below) is large. On the other hand, excessively small thickness deviation ratio makes the flange thickness thick, and the effective aperture is hardly enlarged. Accordingly, in a high-NA lens with a large effective aperture, a lens design cannot be achieved in view of optics under the condition that the thickness deviation ratio is small.

The present invention has been achieved in view of the above problem in the prior art, and is intended to provide a lens which allows to control defects caused in a molding process in a high-NA lens and which is easy to handle.

**SOLUTION TO PROBLEM**

A lens described in Claim 1 is a lens which is molded out of a resin material, comprises a flange section on a periphery and has a numerical aperture of 0.7 or more, characterized by comprising:

a first surface including an optical axis;
a second surface having a curvature which is smaller than a curvature of the first surface, formed on a side opposite to the first surface;
an intermediate end surface formed at an area between the first surface and the flange section along a direction perpendicular to the optical axis; and
a transition surface connecting the intermediate end surface and the first surface,
wherein an angle $\theta 1$ (which is an acute angle) formed between a normal line of the first surface at a border of the transition surface and the first surface and the optical axis, is larger than an angle $\theta 2$ formed between a normal line of the transition surface at a border of the first surface and the transition surface and the optical axis, and
the lens satisfies the following expression, where d (mm) is a distance between the first surface and the second surface on the optical axis and t (mm) is a minimum thickness along the optical axis on the intermediate end surface.

$$4.1 > d/t > 2.8 \qquad (1)$$

According to the results of the study of the present inventor, it has been found that, though the defective molding can be controlled by arranging the transition surface, the defective molding such as flow marks can be generated even when the transition surface is provided under the condition that d/t (which is referred as a thickness deviation ratio) is 4.1 or more. On the other hand, under the condition that d/t is 2.8 or less, the thickness of a flange becomes excessively thin and the lens is hardly attached to a device with accuracy, for example, when it is an objective lens for an optical pickup apparatus. Therefore, by satisfying the expression (1), a lens with controlled defective molding and excellent property of attachment can be provided.

A lens descried in Claim 2 is characterized by satisfying the following expression, in the lens of Claim 1. Therefore, a lens with NA of 0.7 or more can be molded while the defective molding is controlled more effectively.

$$3.8 > d/t > 3.3 \qquad (1')$$

A lens described in Claim 3 is characterized by satisfying the following expression, in the lens of Claim 1 or 2, where $\Delta$ (mm) is a thickness of the flange section along the optical axis.

$$t < \Delta \qquad (2)$$

For example, in an objective lens for use in a general optical pickup apparatus, a flange section which connects to a connecting area has a uniform thickness. Such the form can control the defective molding with relatively ease, by providing a connecting area. On the other hand, in recent years, a lens achieving both of a thin axial thickness and a thick flange section has been desired. In such the lens, the intermediate end surface is needed to be located closer to the second surface than a surface of the flange section at the first-surface side. Under such the situation, the flow direction of resin which goes to a cavity changes rapidly, which causes defective molding such as flow marks easily. According to that, when the lens is configured such that the thickness deviation ratio d/t satisfies the expression (1), the defective molding can be controlled effectively. In other words, it is especially preferable that the thickness deviation ratio satisfies the expression (1) in a lens satisfying the expression (2).

A lens described in Claim 4 is characterized by satisfying the following expression, in the lens of any one of Claims 1 to 3, where D1 is a diameter of an area from the optical axis to an inner circumference of the transition surface and D2 is a diameter of an area from the optical axis to an inner circumference of the intermediate end surface.

$$0.88 < D1/D2 < 0.98 \qquad (3)$$

When the value of D1/D2 is the upper limit of the expression (3) or more, D1 ~ D2 holds, which makes a forming process of a mold for molding the above lens difficult. On the other hand, the value of D1/D2 is the lower limit of the expression (3) or less, the transition surface becomes excessively large, which brings decrease of the thickness deviation ratio d/t and is not preferable. Therefore, the condition satisfying the expression (3) is preferable.

A lens described in Claim 5 is characterized by satisfying the following expression, in the lens of Claim 4.

$$0.94 < D1/D2 < 0.975 \qquad (3').$$

A lens described in Claim 6 is **characterized in that**, in the lens of any one of claims 1 to 5, a width of the intermediate end surface along the direction perpendicular to the optical axis is 50 $\mu$m or more. Therefore, it has an advantage that a mold for molding the lens can be easily formed.

A lens described in Claim 7 is **characterized in that**, in the lens of any one of Claims 1 to 6, a diffractive structure is formed on at least a part of the first surface. As for a lens having a diffractive structure formed on at least a part of the first surface, its molding is especially difficult. Therefore, in the case that the lens is a lens which has compatibility for three media including a BD and which includes diffractive structures on all the surfaces, its molding process is further more difficult and the effect of the present invention is hoped.

There is no limitation for resin, as far as it is a transparent thermoplastic resin which is generally used as an optical material. However, in view of workability as an optical element, the followings are preferable: acryl resin, cyclic olefin resin, polycarbonate resin, polyester resin, polyether resin, polyamide resin and polyimide resin. As an applicable thermoplastic resin, for example, there can be cited compositions described in JP-A No. 2003-73559.

## ADVANTAGEOUS EFFECTS OF INVENTION

According to the present invention, there can be provided a lens such that defects caused in a molding process can be controlled in a high-NA lens and an excellent attachment property is exhibited.

## BRIEF DESCRIPTION OF DRAWINGS

Fig. 1 is a diagram showing steps of molding a lens relating to the present embodiment by using a mold.
Fig. 2 is an enlarged view of the mold.
Fig. 3 shows lens OE of the present embodiment, molded with a mold.
Fig. 4a is an enlarged view of a section II pointed by an arrow in lens OE in Fig. 3, and Fig. 4b is the similar view of lens OE' of a comparative example.

## DESCRIPTION OF EMBODIMENTS

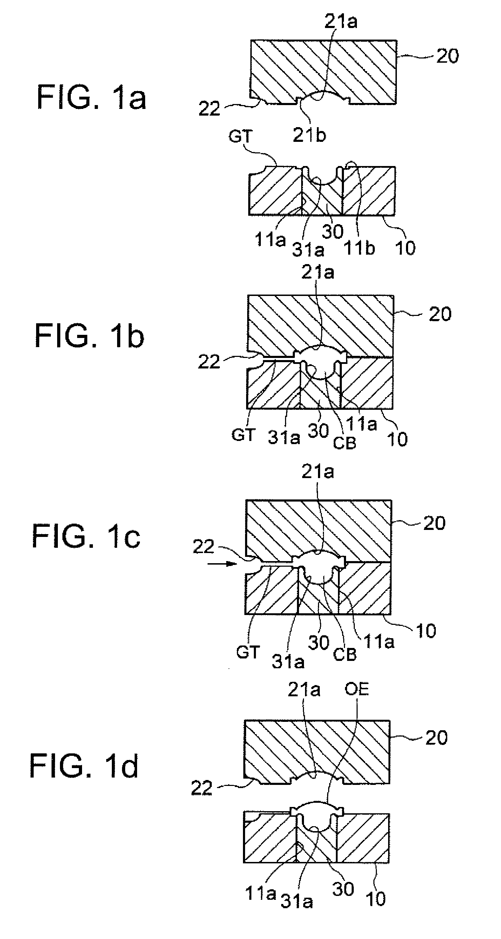

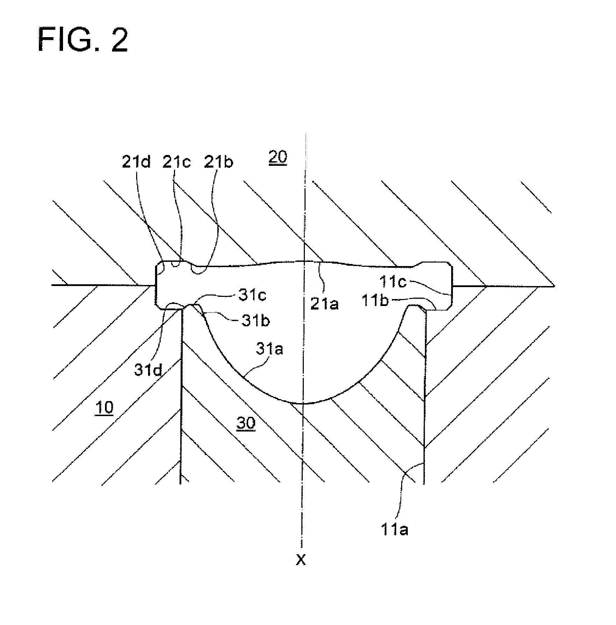

Embodiments of the present invention will be described below with referring to the drawings. Fig. 1 is a diagram showing steps of molding a lens with NA of 0.7 or more for use in an optical pickup apparatus for a BD, by using a mold. Fig. 2 is an enlarged view of the mold. The mold includes first mold 10, second mold 20 and insert 30 which form a cavity under the condition that they are closed. Fig. 1 shows an outline form of the cavity.

As shown in Fig. 2, first mold 10 arranged to face second mold 20 includes opening 11a in cylindrical shape, and insert 30 in cylindrical shape is fitted with the inside of opening 11a. On the end surface of insert 30 which protrudes toward second mold 20, there are formed first optical surface transferring surface 31a for transferring and molding the first optical surface of a lens; transition surface transferring surface 31b for forming a transition surface, arranged next to the first optical surface transferring surface 31a; intermediate end surface transferring surface 31c for forming a intermediate end surface, arranged next to transition surface transferring surface 31b; and taper surface 31d arranged next to intermediate end surface transferring surface 31c. Intermediate end surface transferring surface 31c is located at a position closest to second mold 20, and is formed so as to be perpendicular to the axis X. On first optical surface transferring surface 31a, there may be formed a fine structure such as ringshaped zones corresponding to a diffractive structure to be formed on a lens.

On first mold 10, there are formed first flange end transferring surface 11b to be connected to taper surface 31d of insert 30 which is fitted into first mold 10, for transferring and molding the first end surface of a flange section of a lens; and first flange circumference transferring surface 11c which is perpendicular to first flange end transferring surface 11b, for transferring and molding the circumference surface of the flange section. First flange end transferring surface 11b is perpendicular to axis X of first optical surface transferring surface 31a (an optical axis of the lens). It is preferable that a chamfer section is arranged on an intersectional position of first flange end transferring surface 11b and first flange circumference transferring surface 11c.

Second mold 20 includes, around optical axis X as the center, second optical surface transferring surface 21a for transferring and molding the second optical surface of the lens; taper surface 21b arranged next to second optical surface transferring surface 21a; second flange end transferring surface 21c arranged next to taper surface 21b, for transferring and molding the second end surface of the flange section; and second flange circumference transferring surface 21d which is perpendicular to second flange end transferring surface 21c, for transferring and molding the circumference of the flange section. Second flange end transferring surface 21c is perpendicular to central axis X of second optical surface transferring surface 21a (the optical axis of the lens). It is preferable that a chamfer section is arranged on an intersectional position of second flange end transferring surface 21c and second flange circumference transferring surface 21d, too.

As shown in Fig. 1, gate GT (entrance channel) is formed on first mold 10.

Next, a method of molding a lens will be described. At first, insert 30 is inserted into opening 11a of first mold 10 as shown in Fig. 1a, and first mold 10 is set to face second mold 20. After that, as shown in Fig. 1b, first mold 10 and insert 30 are located to approach and come in contact with second mold 20 relatively, and mold closing is carried out with a predetermined pressure kept. At that time, positions of butting end sections of first flange circumference transferring surface 11c and opposing second flange circumference transferring surface 21d coincide with each other.

Optical surface transferring surfaces 31a and 21a are heated to a predetermined temperature at the time of mold closing by heating first mold 10 and second mold 20 by a heater which is not illustrated. After that, resin which is pressurized at an arbitral pressure is supplied through runner 22 and gate GT from a nozzle which is not illustrated (see Fig. 1c).

Next, after molten resin is solidified with shapes of transferring surfaces 31a to 31d, 11b to 11c and 21a to 21d being transferred thereon, the mold temperature is decreased to cool and solidify the resin.

After that, when first mold 10 and insert 30, and second mold 20 are relatively moved to carry out mold opening, a molded body including lens OE is exposed with sticking to first mold 10. When lens OE is separated from such the molded body, lens OE as a single body is formed.

According to the present embodiment, transition surface transferring surface 31b for forming a transition surface is formed between the first optical surface transferring surface 31a and intermediate end surface transferring surface 31c, which can prevent a rapid change of the direction of resin moving toward a cavity in a molding process and allows highly accurate molding with controlling generation of flow marks even when lens OE with large thickness deviation ratio is molded.

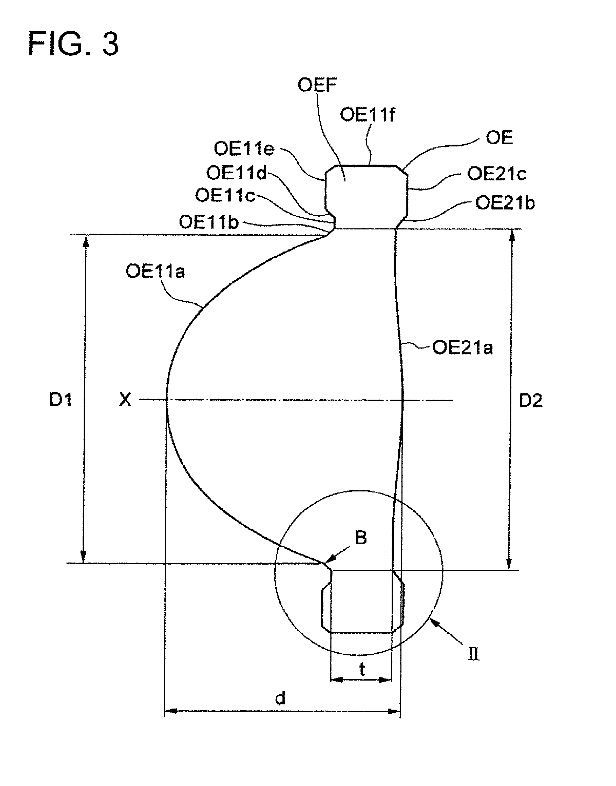

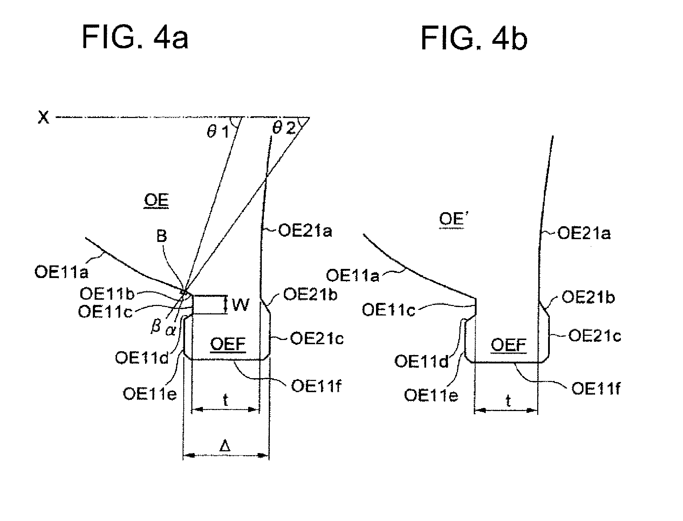

Fig. 3 shows a sectional view of lens OE molded with a mold shown in Figs. 1 and 2, relating to the present embodiment. Fig. 4a is an enlarged view of the section II which is pointed by an arrow in lens OE in Fig. 3, and Fig. 4b is a similar view of lens OE' of a comparative example. Hereinafter, a lens of the present embodiment will be described, being compared with the comparative example.

In Fig. 3, lens OE of the present embodiment includes, around optical axis X as the center, first optical surface (first surface) OE11a formed in spherical shape and including optical axis X; transition surface OE11b formed in ringed shape and arranged next to the first optical surface; intermediate end surface OE 11c formed in ringed shape and arranged next to the transition surface; taper surface OE 11d arranged next to the intermediate end surface; first end surface OE11e of flange section OEF formed in ringed shape and arranged next to the taper surface; and circumference surface OE11f of flange section OEF arranged to be perpendicular to the first end surface. A diffractive structure may be arranged on first optical surface OE11a. Lens OE includes second optical surface (second surface) OE21a formed in spherical shape and concentrically facing first optical surface OE11a; taper surface OE21b formed in ringed shape and arranged next to the second optical surface; and second end surface OE21c of the flange section arranged next to the taper surface. When the lens is attached to an optical pickup apparatus which is not illustrated, first optical surface OE11a faces a light source and second optical surface OE21a faces an optical disc. Herein, a distance between first optical surface OE11a and second optical surface OE21a along optical axis X is represented as d (axial thickness). The diameter of an area up to the inner circumference of transition surface OE 11b is represented as D1, and the diameter of an area up to the inner circumference of the intermediate end surface OE11c is represented as D2.

In lens OE' of a comparative example shown in Fig. 4b, a transition surface does not exist and first optical surface OE11a directly connects to intermediate end surface OE11c. On the other hand, in lens OE of the present embodiment shown in Fig. 4a, first optical surface OE11a connects to intermediate end surface OE11c through transition surface OE11b. Herein, angle θ1 (which is an acute angle) formed between normal line a and optical axis X is larger than angle θ2 formed between normal line β and optical axis X, where normal line a is a normal line of first surface 11a at border B of transition surface OE11b and first surface 11a, and normal line β is a normal line of transition surface OE11b at border B of first surface OE11a and transition surface OE11b. In other words, in first optical surface OE 11a, the angle formed between the normal line of the first optical surface and optical axis X comes closer to 90 degrees gradually, at a position which goes from optical axis X to the radial direction, then, the angle of the normal line becomes shallow when the position goes into transition surface OE11b across border B. Therefore, border B corresponds to an inflection point. Since transition surface OE11b is arranged outside effective aperture E, it does not affect optical properties of lens OE.

It is generally said that width W of intermediate end surface OE11c in the direction perpendicular to the optical axis is required to be 50 μm or more for reasons of manufacturing insert 30. As for an objective lens for an optical pickup apparatus, it is from about 50 μm to about 150 μm generally. Accordingly, in lens OE relating to the present embodiment, its minimum thickness t along the optical axis at intermediate end surface OE 11c is larger than the minimum thickness t' of lens OE' of the comparative example along the optical axis at intermediate end surface OE11c, when transition surface OE11b is formed in lens OE, under the assumption that the maximum outer circumferences are uniform. Herein, the minimum thickness t along the optical axis at intermediate end surface OE11c is smaller than thickness Δ of flange section OEF along the optical axis. When thickness Δ of flange section OEF along the optical axis is secured to be large, it has advantages such that, under the condition that lens OE is put on a flat surface, the lens is hardly damaged because of a space formed between second optical surface OE21a and the flat surface. In order to realize a compact lens OE, it is preferable that border B is arranged at a place that is closer to second optical surface OE21a than first end surface OE11d of flange section OEF and that is closer to first optical surface OE21a than intermediate end surface OE11c.

(Injection molding of lens)

Next, results of experiments which have been conducted by the present inventor will be described. The present inventor designed objective lenses with a numerical aperture of 0.85 for an optical pickup apparatus exclusively for a Blu-ray Disc, where the objective lenses have various thickness deviation ratios and various sizes of transition surfaces. The present inventor prepared molds (see Fig. 2) corresponding to them. After drying resin material at 70°C to 120°C for five hours with hot-air dehumidifying and drying machine to remove water from the material, the inventor conducted injection molding for the material with an injection molding machine "s-2000i 50A" (which is a product name, produced by FANUC CORPORATION) on which a selected mold is attached, at a cylinder temperature of 200°C to 270°C and holding pressure of 70MPa to 100MPa. At that time, the mold temperature was controlled by oil medium. Concretely, a mold cavity temperature in a process of an injection and filling process for resin was set to 120°C to 150°C, and the mold was cooled at the same time when the filling process was completed. After the mold was opened and a lens was taken out from the mold with an automatic taking machine, its degree of appearance defect was evaluated.

Tables 1 and 2 show the evaluation results. In Tables 1 and 2, the thickness deviation ratio is given by d/t. In Table 2, a splitting ratio is given by D1/D2 × 100. In the tables, as for the evaluation of appearance defects, the condition that molding defects such as flow marks were caused in 2% or less of samples is represented by the symbol A, the condition that the mold defects were caused in 2% to 5% of samples is represented by the symbol B, the condition that the mold defects were caused in 5% to 10% of samples is represented by the symbol C, and the condition that the mold defects were caused in 10% or more of samples is represented by the symbol D. As for the evaluation of configuration, the condition that the thickness deviation ratio was 3.3 or more is represented by the symbol A, the condition that the ratio was 3.3 to 2.8 is represented by the symbol B, the condition that the ratio was 2.8 to 2.5 is represented by the symbol C, and the condition that the ratio was less than 2.5 is represented by the symbol D.

Table 1

| Thickness deviation ratio | Appearance defects | Configuration |
|:---:|:---:|:---:|
| 4.1 | C | A |
| 3.8 | B | A |
| 3.5 | A | A |
| 3.3 | A | A |
| 2.8 | A | C |
| 2.5 | A | C |
| Less than 2.5 | A | D |

Table 2

| Thickness deviation ratio | Split ratio (%) | Configuration |
|:---:|:---:|:---:|
| 4.3 | 98.5 | C |
| 4.06 | 97.5 | A |
| 3.8 | 96 | A |
| 3.3 | 94.5 | A |
| 2.7 | 90 | B |
| 2.5 | 88 | C |

The evaluation results in Table 1 show that, when the thickness deviation ratio d/t is 4.1 or less and is 2.8 or more, a molding process can be conducted without problems in actual use. Further, the results show that the thickness deviation ratio d/t in the range of 3.8 or less and 3.3 or more is preferable, for achieving both of proper appearance defects and proper configuration which generally have a trade-off relationship.

The evaluation results in Table 2 show that, when the split ratio (D1/D2 × 100) is 88% or more and is 98% or less, a molding process can be conducted without problems. Further, the results show that the split ratio of 94% or more and 97.5% or less is preferable for making the configuration into an excellent condition.

**INDUSTRIAL APPLICABILITY**

As described above, the present invention has been descried with reference to embodiments. However, it is to be understood that the present invention should not be interpreted under limitations of the above embodiments and various changes and modifications will be apparent to those skilled in the art. For example, the present invention can be applied for various lenses not only for an objective lens for use in an optical pickup apparatus.

**CITATIONLIST**

| 10 | First mold |
|----|----|
| 11a | Optical surface |
| 11a | Opening |
| 11b | Flange end transferring surface |
| 11c | Flange circumference transferring surface |
| 20 | Second mold |
| 21a | Optical transferring surface |
| 21b | Taper surface |
| 21c | Flange end transferring surface |
| 21d | Flange circumference transferring surface |
| 22 | Runner |
| 30 | Insert |
| 31a | Optical surface transferring surface |
| 31b | Transition surface transferring surface |
| 31c | Intermediate end surface transferring surface |
| 31d | Taper surface |
| a | Normal line |
| β | Normal line |
| θ1 | Angle |
| θ2 | Angle |
| B | Border |
| GT | Gate |
| OE | Lens |
| OE11 | Intermediate end surface |
| OE11a | First optical surface |
| OE11b | Transition surface |
| OE11c | Intermediate end surface |
| OE11d | Taper surface |
| OE11e | First end surface of the flange section |
| OE11f | Circumference surface of the flange section |
| OE21a | Second optical surface |
| OE21b | Taper surface |
| OE21c | Second end surface of the flange section |
| OEF | Flange section |
| X | Optical axis or Axis |

**Claims**

1. A lens which is molded out of a resin material, comprises a flange section on a periphery and has a numerical aperture of 0.7 or more, **characterized by** comprising:

   a first surface including an optical axis;
   a second surface having a curvature which is smaller than a curvature of the first surface, formed on a side opposite to the first surface;
   an intermediate end surface formed at an area between the first surface and the flange section along a direction perpendicular to the optical axis; and

a transition surface connecting the intermediate end surface and the first surface,
wherein an angle θ1 (which is an acute angle) formed between a normal line of the first surface at a border of the transition surface and the first surface and the optical axis, is larger than an angle θ2 formed between a normal line of the transition surface at a border of the first surface and the transition surface and the optical axis, and
the lens satisfies the following expression:

$$4.1 > d/t > 2.8 \qquad (1)$$

where d (mm) is a distance between the first surface and the second surface on the optical axis and t (mm) is a minimum thickness along the optical axis on the intermediate end surface.

2. The lens of claim 1, **characterized by** satisfying the following expression:

$$3.8 > d/t > 3.3 \qquad (1').$$

3. The lens of claim 1 or 2, **characterized by** satisfying the following expression:

$$t < \Delta \qquad (2),$$

where $\Delta$ (mm) is a thickness of the flange section along the optical axis.

4. The lens of any one of claims 1 to 3, **characterized by** satisfying the following expression:

$$0.88 < D1/D2 < 0.98 \qquad (3),$$

where D1 is a diameter of an area from the optical axis to an inner circumference of the transition surface and D2 is a diameter of an area from the optical axis to an inner circumference of the intermediate end surface.

5. The lens of claim 4, **characterized by** satisfying the following expression:

$$0.94 < D1/D2 < 0.975 \qquad (3').$$

6. The lens of any one of claims 1 to 5, **characterized in that**
a width of the intermediate end surface along the direction perpendicular to the optical axis is 50 $\mu$m or more.

7. The lens of any one of claims 1 to 6, **characterized in that**
a diffractive structure is formed on at least a part of the first surface.

FIG. 1a

FIG. 1b

FIG. 1c

FIG. 1d

# FIG. 2

## FIG. 3

# FIG. 4a

# FIG. 4b

<div align="center">**INTERNATIONAL SEARCH REPORT**</div>

| | International application No. |
|---|---|
| | PCT/JP2010/052726 |

**A. CLASSIFICATION OF SUBJECT MATTER**
*G02B3/00*(2006.01)i, *G02B5/18*(2006.01)i, *G11B7/135*(2006.01)i

According to International Patent Classification (IPC) or to both national classification and IPC

**B. FIELDS SEARCHED**

Minimum documentation searched (classification system followed by classification symbols)
G02B3/00, G02B5/18, G11B7/135

Documentation searched other than minimum documentation to the extent that such documents are included in the fields searched
Jitsuyo Shinan Koho          1922–1996    Jitsuyo Shinan Toroku Koho    1996–2010
Kokai Jitsuyo Shinan Koho    1971–2010    Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-200654 A (Konica Corp.), 16 July 2002 (16.07.2002), entire text; all drawings (Family: none) | 1-7 |
| A | JP 2005-132002 A (Konica Minolta Opto, Inc.), 26 May 2005 (26.05.2005), entire text; all drawings & US 2005/0094294 A1 | 1-7 |
| A | JP 2002-200652 A (Konica Corp.), 16 July 2002 (16.07.2002), entire text; all drawings & US 2002/0085283 A1    & CN 001362624 A | 1-7 |

☒ Further documents are listed in the continuation of Box C.      ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 March, 2010 (19.03.10) | 06 April, 2010 (06.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/052726 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2003-248106 A  (Mitsubishi Electric Corp.), 05 September 2003 (05.09.2003), entire text; all drawings (Family: none) | 1-7 |

Form PCT/ISA/210 (continuation of second sheet) (July 2009)

**EP 2 416 186 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003015031 A
- JP 2003073559 A